# EUROPEAN PATENT APPLICATION

(11) **EP 4 760 999 A2**
(43) Date of publication of application: **17.06.2026**
(21) Application number: 24885060.4
(22) Date of filing: 31.12.2024
(51) Int. Cl.: H01R 13/02, H01M 50/298, H01M 50/296, H01M 50/244, H01R 13/40

(54) **HIGH-VOLTAGE POWER DISTRIBUTION DEVICE, BATTERY DEVICE AND ELECTRIC APPARATUS**

(30) Priority: 31.10.2023 CN 202322933204 U; 29.11.2023 CN 202323249361 U; 19.02.2024 CN 202420304927 U; 16.07.2024 CN 202421675064 U
(71) Applicant: Contemporary Amperex Technology Co., Limited, Ningde, Fujian 352100 (CN)
(72) Inventor: QIU, Guanda, Ningde, Fujian 352100 (CN); LI, Yuanxin, Ningde, Fujian 352100 (CN); WANG, Chong, Ningde, Fujian 352100 (CN)
(74) Representative: Lorenz Seidler Gossel Part. mbB
(86) International application number: PCT/CN2024/144592
(87) International publication number: WO 2025/093065

(57) **Abstract**

The present application belongs to the technical field of batteries, and specifically relates to a high-voltage power distribution device, a battery device and an electric apparatus. The high-voltage power distribution device includes a housing and electrical connection members, wherein the housing includes a first housing body, and the first housing body includes an insulated housing main body; the plurality of electrical connection members are arranged spaced apart from one another and are embedded in the housing main body; each electrical connection member includes a connection portion and an output portion, the connection portion being electrically connected to an electrical member; and the housing main body is further provided with an interface into which an external electrical connector can be adaptively plugged, and the output portion extends to be located within the interface. Each output portion is exposed to an inner wall surface of the interface, wherein when the external electrical connector is plugged into the interface, a connection terminal in the electrical connector comes into electrical contact with the corresponding output portion, and each output portion is accommodated in the interface and is electrically connected to an external electrical connection structure by means of the interface, such that there is no need to lead out the output portions by means of an adapter or a wire, thus facilitating the simplification of the overall structure of the high-voltage power distribution device, and increasing the assembly efficiency.

## Description

The present application claims priority to and incorporates by reference Chinese Patent Application No. 202322933204.8 entitled "Conductor Structure, Housing Structure, Electric Control Apparatus, Battery and Electric Device" filed on October 31, 2023; Chinese Patent Application No. 202420304927.3 entitled "Cover Body Structure, Battery Pack and Electric Apparatus" filed on February 19, 2024; Chinese Patent Application No. 202421675064.7 entitled "High-voltage Box, Battery Device and Electric Apparatus" filed on July 16, 2024; and Chinese Patent Application No. 202323249361.3 entitled "High-Voltage Power Distribution Device, Battery and Electric Device" filed on November 29, 2023, which is incorporated herein by reference in its entirety.

### TECHNICAL FIELD

The present application belongs to the technical field of batteries, and particularly to a high-voltage power distribution device, a battery device, and an electric apparatus.

### BACKGROUND

With the advancement of science and technology, new energy electric vehicles have begun to gain widespread adoption. As one of the core components of electric vehicles, the battery device serves as the energy hub; for electric vehicles, battery technology is a critical factor influencing their development.

The battery device is configured with a high-voltage power distribution device, wherein the assembly efficiency of individual components of the high-voltage power distribution device directly impacts the overall assembly efficiency of the battery device.

The above statement merely provides the background information related to the present application and do not necessarily constitute the prior art.

### SUMMARY

An objective of embodiments of the present application is to provide a high-voltage power distribution device, a battery device, and an electric apparatus, to improve the assembly efficiency of the high-voltage power distribution device.

An embodiment of the present application adopts the technical solutions below:

In a first aspect, a high-voltage power distribution device is provided, which comprises:
a housing;
an electrical member provided in the housing; and
a plurality of electrical connection members, wherein
the housing comprises a first housing body, and the first housing body comprises an insulated housing main body; the plurality of electrical connection members are arranged spaced apart from one another and are embedded in the housing main body; each electrical connection member comprises a connection portion and an output portion, the connection portion being electrically connected to an electrical member; and the housing main body is further provided with an interface into which an external electrical connector can be adaptively plugged, and the output portion extends to be located within the interface and is configured to be electrically connected to the electrical connector plugged into the interface.

According to the technical solutions in the embodiments of the present application, the first housing is provided with the interface that adapts to the external electrical connector which can be adaptively plugged into the interface, the output portion of each electrical connection member is led into the internal space of the interface, each output portion is exposed to the inner wall surface of the interface, and when the external electrical connector is plugged into the interface, the connection terminal in the electrical connector is in electrical contact with the corresponding output portion, so that each electrical connection member is connected to the external circuit by using the corresponding electrical connector. As such, the output portion of each electrical connection member for connecting to the external circuit is led out into the interface, and the electrical connection is created in the form of plugging with the external electrical connector by means of the interface, and each output portion is accommodated in the interface without protruding beyond the surface of the housing main body, so that the risk of interference between the output portion and other adjacent components can be effectively reduced, and there is no need to lead out the output portions by means of an adapter or a wire, thus facilitating the simplification of the overall structure of the high-voltage power distribution device, and increasing the assembly efficiency.

**In** some embodiments, the interface has a cavity penetrating through a surface of the housing main body, and the output portion is exposed to a cavity wall of the cavity.

According to the technical solutions in the embodiments of the present application, the interface, serving as the connection portion for linking and interacting between the internal electrical members of the high-voltage power distribution device and external circuits, is provided with a cavity, the cavity can accommodate the output portion of each electrical connection member, the output portion is accommodated in a space defined by the cavity, the external connector can be positioned and connected to the interface by means of the cavity, the cavity can also play a role of protecting the output portion, and the output portion is exposed to a surface of the cavity wall, so that the output portion can be in contact with a terminal, a pin, a contact or the like in the electrical connector plugged into the cavity to achieve an electrical connection. In addition, the cavity penetrates through the side wall of the housing main body, so that the external electrical connector can be directly plugged into the housing main body and connected to the housing main body, thereby helping improve connection reliability and stability between the external electrical connector and the interface, and improving the stability and reliability of electric energy transmission.

In some embodiments, the interface is a groove recessed in an outer wall surface of the housing main body.

According to the technical solutions in the embodiments of the present application, the interface is designed in the form of a groove, and compared with other interfaces directly exposed to the outside, the groove wall of the groove can provide certain protection for the internal output portion, and when the external electrical connection matched with the groove is plugged into the groove, the surrounding wall surfaces can reduce the interference and erosion of external impact, dust, water vapor, etc. on the connection portion to a certain extent, which is helpful to maintain the stability and reliability of the connection and prolong the service life of the connection portion and the entire device. Moreover, the shape and size of the groove can limit the position of the connector connected thereto by design, so that the connector is not prone to loosening, displacement, etc., and the normal performance of various functions after connection is guaranteed.

In some embodiments, the housing further comprises a second housing, the electrical member is provided on the second housing, and the first housing is connected to a side of the second housing in a first direction;
the interface is provided on the side of the housing main body in a direction perpendicular to the first direction;
or, the interface is provided at a top of the housing main body away from the second housing in the first direction.

According to the technical solutions in the embodiments of the present application, the interface is provided on the side or the top of the housing main body, so that the interface can avoid a connection region between the first housing and the second housing, thereby reducing structural interference and facilitating the plugging/unplugging operation of the external connector.

In some embodiments, the opening of the interface is provided toward a direction intersecting the first direction.

According to the technical solutions in the embodiments of the present application, the opening is arranged in the direction intersecting the first direction, so that the electrical connector is plugged into the interface in the direction intersecting the first direction, that is, the direction intersecting the assembling direction of the first housing and the second housing, the electrical connector can be plugged to effectively avoid the connection region between the first housing and the second housing, and the interference risk is reduced; meanwhile, when structures such as a liquid cooling plate are externally set in the first direction of the high-voltage power distribution device, a sidewall of the interface can also shield the opening of the interface in the first direction, thereby also reducing the risk of condensation entering the interface.

In some embodiments, the output portions are spaced apart and protrude into the interface and are provided toward the opening of the interface.

According to the technical solutions in the embodiments of the present application, the output portion is suspended in the cavity of the interface, so that the interface as a whole can be used as a male connector to be adaptively plugged into an external female connector, the overall structure of the interface is simpler, and the connection mode with the external electrical connector is also more direct.

In some embodiments, a spacing distance between two adjacent output portions is greater than 3 mm.

According to the technical solutions in the embodiments of the present application, in the interface, the spacing distance between two adjacent output portions is greater than 3 mm, that is, when no insulating member is used to separate the two adjacent output portions, the electrical gap is greater than 3 mm, to meet the requirements of electrical safety.

In some embodiments, an insulating portion is further provided between two adjacent output portions, and the two adjacent output portions are electrically isolated by means of the insulating portion.

According to the technical solutions in the embodiments of the present application, the insulating portion is provided between two adjacent output portions, and the two output portions are electrically isolated by means of the insulating portion, especially for some cases of higher voltage, the insulating portion can be provided to effectively shorten the spatial distance between the two adjacent output portions, thereby helping to reduce the size of the interface and make the structure of the interface more compact.

In some embodiments, a peripheral side wall of the insulating portion is fitted and connected to each inner side wall of the interface, and the insulating portion divides an internal space of the interface into a plurality of sub-regions, wherein one of the sub-regions is correspondingly provided with one of the output portions.

According to the technical solutions in the embodiments of the present application, the internal space of the interface is divided into a plurality of sub-regions by the insulating portion, one output portion is correspondingly provided in one sub-region, and the output portions in two adjacent sub-regions are effectively separated by the insulating portion, thereby reducing the risk of electrical interference generated in the two adjacent sub-regions, and further improving the electrical safety of the interface.

In some embodiments, the number of the sub-regions is greater than or equal to that of the output portions.

According to the technical solutions in the embodiments of the present application, the number of sub-regions is determined by the number of insulating members and the number of the output portions, and by setting a suitable number of insulating members, the internal space of the interface is divided into a suitable number of sub-regions, so that each sub-region is correspondingly provided with exactly one output portion, or the number of the sub-regions is greater than that of the output portions, and one or more sub-regions are not provided with the output portion, and the sub-region not provided with an output portion may be used as a spare space on the one hand, and may also be used as a guide space on the other hand, to adapt to the structure on the external connector and guide the connector to connect to the interface.

In some embodiments, the interface has a first wall surface provided directly opposite to the opening, the output portion and the insulating portion both protrude from the first wall surface, and a protruding dimension of the insulating portion is greater than that of the two adjacent output portions.

According to the technical solutions in the embodiments of the present application, the protruding dimension of the insulating portion is greater than that of the two adjacent output portions, enabling the insulating portion to more comprehensively cover and separate the adjacent output portions in space. Current must climb over the corresponding insulating portion to travel from one output portion to the other, thereby achieving insulation.

In some embodiments, the plurality of output portions are sequentially arranged at intervals in a direction perpendicular to a direction from the first wall surface toward the opening, and the insulating portion is arranged parallel to the output portions;
in the direction perpendicular to the direction from the first wall surface to the opening, spacing distances between the insulating portion and the two adjacent output portions are L1 and L2, respectively, and a thickness of the insulating portion is L3;
in the direction from the first wall surface to the opening, the protruding dimensions of the insulating portion relative to the two adjacent output portions are L4 and L5, respectively, wherein
a sum of L1, L2, L3, L4 and L5 is greater than 3 mm.

According to the technical solutions in the embodiments of the present application, when the two electrical connection members corresponding to the two adjacent output portions are connected in a low-voltage loop, a creepage distance between the two output portions is greater than 3 mm to meet the insulation requirements.

In some embodiments, a sum of L1, L2, L3, L4 and L5 is greater than 9.5 mm.

According to the technical solutions in the embodiments of the present application, when the two electrical connection members corresponding to the two adjacent output portions are connected in a loop with a higher voltage, the creepage distance between the two output portions is greater than 9.5 mm to meet the insulation requirements.

In some embodiments, a sum of L1, L2, L3, L4 and L5 is greater than 19mm.

According to the technical solutions in the embodiments of the present application, when the two electrical connection members are connected in a greater voltage loop, a creepage distance between the two output portions is greater than 19 mm to meet the insulation requirements.

In some embodiments, a guide structure is further provided in the interface, and the guide structure is configured to guide an external electrical connector to be adaptively plugged into the interface.

According to the technical solutions in the embodiments of the present application, the guide ribs are provided in the interface to cooperate with the corresponding structures on the external electrical connector, which facilitates plugging of the external electrical connector, can improve the connection efficiency of the external electrical connector to a certain extent, and simplify the connection operation.

In some embodiments, the guide structure comprises guide ribs protruding from an inner wall surface of the interface, and the guide ribs are provided in parallel with the output portion.

In some embodiments, the guide ribs are spaced apart from the adjacent insulating portion, arranged in parallel with the insulating portion at intervals, and form a guide groove with the adjacent insulating portion.

In some embodiments, a plurality of reinforcing ribs are further provided in parallel and spaced apart on the inner wall surface of the interface, and the reinforcing ribs and the guide ribs are arranged in parallel and spaced apart.

**In** some embodiments, the electrical connection member comprises a first connection member and a second connection member, and the interface comprises a first interface into which an external first connector can be adaptively plugged, wherein
the connection portion comprises a first connection portion and a second connection portion, the output portion comprises a first output portion and a second output portion, the first connection portion and the first output portion are provided on the first connection member at intervals, the second connection portion and the second output portion are provided on the second connection member at intervals, the first connection portion and the second connection portion are electrically connected to the different electrical members, respectively, and the first output portion and the second output portion both extend into the first interface and are configured to be electrically connected to the first connector.

According to the technical solutions in the embodiments of the present application, the first connection member and the second connection member are used in cooperation to electrically connect the external circuit to the first connection member and the second connection member, and achieve current transmission between the external circuit and the electrical member.

In some embodiments, there are a plurality of first connection members, there are a plurality of second connection members, and the number of the first connection members is equal to that of the second connection members.

In some embodiments, the first output portions of the plurality of first connection members and the second output portions of the plurality of second connection members are alternately arranged at intervals, or the first output portions of the plurality of first connection members are continuously arranged at intervals, and the second output portions of the plurality of second connection members are continuously arranged at intervals.

In some embodiments, the electrical member comprises a relay, the relay has a first terminal and a second terminal that are electrically connected to two opposite ends of a coil, respectively, the first connection portion is electrically connected to the first terminal correspondingly, and the second connection portion is electrically connected to the second terminal correspondingly.

According to the technical solutions in the embodiments of the present application, the first connection portion of the first connection member is electrically connected to the first terminal correspondingly, the second connection portion of the second connection member is electrically connected to the second terminal correspondingly, and the corresponding first output portion and second output portion are electrically connected to the electrical connector of the external power supply, so that the external power supply and the coil of the relay can be connected, thereby supplying power to the coil by using the external power supply.

In some embodiments, the relay comprises at least one of a main positive relay, a main negative relay, and a pre-charge relay, and the number of the first connection members and the number of the second connection members are greater than or equal to that of the relays.

In some embodiments, the electrical connection member further comprises a plurality of third connection members, the interface further comprises a second interface into which an external second connector can be adaptively plugged, and the electrical member further comprises a plurality of high-voltage sampling members, wherein
the connection portion further comprises a third connection portion, the output portion comprises a third output portion, each of the third connection members is provided with one third output portion and at least one third connection portion at intervals, each of the third connection portions is connected to the high-voltage sampling member in one-to-one correspondence, and each of the third output portions extends into the second interface and is configured to be electrically connected to the second connector.

According to the technical solutions in the embodiments of the present application, the second interface is provided on the housing main body, and the third output portion of the third connection member for connecting each high-voltage sampling point is extended into the second interface to be connected to the electrical connector of the external control system by means of the second interface, thereby achieving the transmission of a voltage signal. Meanwhile, the first interface and the second interface can spatially distinguish and isolate electrical connection members of different functions, which also helps reduce the risk of electrical interference and connection errors.

In some embodiments, one third connection member comprises one third connection portion, and one third connection member is electrically connected to one high-voltage sampling member in one-to-one correspondence.

According to the technical solutions in the embodiments of the present application, one third connection member comprises one third connection portion, and one third connection member is electrically connected to one high-voltage sampling member by means of one third connection portion, so that the voltage signals at the high-voltage sampling positions are led out in one-to-one correspondence, one high-voltage sampling position corresponds to one high-voltage sampling member and one third connection member, the number of the third connection members is equal to that of the high-voltage sampling members, and the number of the third output portions is equal to that of the high-voltage sampling positions.

In some embodiments, one third connection member comprises two third connection portions that are provided at intervals, the two third connection portions are correspondingly connected to two high-voltage sampling members, respectively, and the one third connection member is electrically connected to the two high-voltage sampling members correspondingly.

According to the technical solutions in the embodiments of the present application, one third connection member comprises two third connection portions, one third connection member is electrically connected to one high-voltage sampling member by means of one third connection portion, and is electrically connected to the other high-voltage sampling member by means of the other third connection portion, wherein the voltage signals of two high-voltage sampling positions connected by two different third connection portions on the same third connection member do not need to be acquired at the same time, as such, the voltage signals at each high-voltage sampling position can also be led out by means of the third output portions of each third connection member in one-to-one correspondence.

In some embodiments, the high-voltage power distribution device has a main circuit and a pre-charge circuit, one of the third connection portions provided on the same third connection member is electrically connected to the high-voltage sampling member provided in the main circuit, and the other third connection portion is electrically connected to the high-voltage sampling member provided in the pre-charge circuit.

According to the technical solutions in the embodiments of the present application, the high-voltage sampling members at the two high-voltage sampling positions that do not need to be sampled simultaneously in the pre-charge circuit and the main circuit are connected to different third connection portions on the same third connection member, thereby reducing the number of third connection members and helping to simplify the structure.

In some embodiments, the first interface and the second interface are spaced apart from each other, and a spacing distance between the first interface and the second interface is greater than 9.5 mm, or a spacing distance between the first interface and the second interface is greater than 19 mm.

According to the technical solutions in the embodiments of the present application, the spacing distance between the first interface and the second interface meets the requirements of electrical installation, thereby ensuring normal use of the high-voltage power distribution device.

In some embodiments, the first interface and the second interface are located on a same side of the housing main body, or the first interface and the second interface are located on two adjacent sides of the housing main body, or the first interface and the second interface are located on two opposite sides of the housing main body.

According to the technical solutions in the embodiments of the present application, the first interface and the second interface are arranged on the same side of the housing main body, that is, the first interface and the second interface are plugged with the external electrical connectors on the same side of the high-voltage power distribution device, which as such facilitates centralized connection with the external electrical connector, helps to simplify the layout of external connection lines, reduces line crossing and confusion, and improves the regularity and reliability of connection. Or, the first interface and the second interface are provided on different sides of the housing main body, that is, the first interface is provided on one side of the housing main body, the second interface is provided on the other side of the housing main body, and the first interface and the second interface are spatially located on different sides of the housing main body, so that the first interface and the second interface can better adapt to connection requirements of external electrical connectors at different locations, and the connection is more flexible and convenient.

In some embodiments, the first interface and the second interface are provided at two opposite ends of the housing main body.

According to the technical solutions in the embodiments of the present application, the first interface and the second interface are provided at two ends of the housing main body that have a relatively large spacing distance, so that the first interface and the second interface are spatially separated by a considerable interval, which help to reduce mutual interference between the first interface and the second interface on the one hand, and also helps to optimize a layout of the first connection member, the second connection member, and the third connection member in the housing main body on the other hand, so that an internal structure of the first housing is more orderly and compact.

In some embodiments, the housing main body is further provided with a first identification portion and a second identification portion, the first identification portion is provided on a side of the first interface, the second identification portion is provided on a side of the second interface, and the first identification portion and the second identification portion have different identification contents.

According to the technical solutions in the embodiments of the present application, the corresponding first identification portion and second identification portion are respectively provided near the first interface and the second interface, and the two identification portions are provided with different identification information, so that the user can distinguish the first interface and the second interface by the corresponding identification information.

According to a second aspect, the present application provides a battery device comprising a battery cell assembly and the above-mentioned high-voltage power distribution device, wherein the high-voltage power distribution device is configured to be electrically connected to the battery cell assembly.

In a third aspect, the present application provides an electric apparatus comprising the above-mentioned battery device, and the battery device is used for supplying electrical energy to the electric apparatus.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### DESCRIPTION OF DRAWINGS

To describe technical solutions in embodiments of the present application more clearly, the following briefly describes the accompanying drawings for describing the embodiments or the exemplary technology. It is clear that the accompanying drawings described in the following are merely some embodiments of the present application. A person skilled in the art in the art can still derive other accompanying drawings from these accompanying drawings without creative efforts.
FIG. 1 is a schematic diagram of a structure of a vehicle according to some embodiments of the present application;
FIG. 2 is a schematic diagram of an exploded battery device according to some embodiments of the present application;
FIG. 3 is a schematic structural diagram of a high-voltage power distribution device provided according to some embodiments of the present application;
FIG. 4 is an enlarged partial view of a first housing of a high-voltage power distribution device provided according to further embodiments of the present application;
FIG. 5 is a partial view of a cross-sectional view of a first housing as shown in FIG. 4;
FIG. 6 is another perspective view of a first housing as shown in FIG. 4;
FIG. 7 is an enlarged partial view of a first housing of a high-voltage power distribution device provided according to further embodiments of the present application;
FIG. 8 is a partial view of a cross-sectional view of a first housing as shown in FIG. 7;
FIG. 9 is another perspective view of a first housing as shown in FIG. 7;
FIG. 10 is an exploded view of a high-voltage power distribution device as shown in FIG. 3;
FIG. 11 is a schematic structural diagram of an electrical connection member of a high-voltage power distribution device as shown in FIG. 3; and
FIG. 12 is a schematic structural diagram of a first housing of the high-voltage power distribution device as shown in FIG. 3.

In which, reference signs in the figures: 100. vehicle; 1001. controller; 1002, motor; 200. battery device; 10. high-voltage power distribution device; 10a. housing; 101. first housing; 11. housing main body; 111. guide structure; 1111. guide rib; 1112. guide groove; 112. reinforcing rib; 12. electrical connection member; 121. connection portion; 1211. first connection portion; 1212. second connection portion; 1213. third connection portion; 123. output portion; 1231. first output portion; 1232. second output portion; 1233. third output portion; 124. first connection member; 125. second connection member; 126. third connection member; 13. interface; 130. opening; 131. cavity; 1311. sub-region; 1312. first wall surface; 132. first interface; 133. second interface; 14. first identification portion; 15. second identification portion; 16. insulating portion; 102. second housing; 103. electrical member; 1031. relay; 10311. first terminal; 10312. second terminal; 1032 high-voltage sampling member.

### DESCRIPTION OF EMBODIMENTS

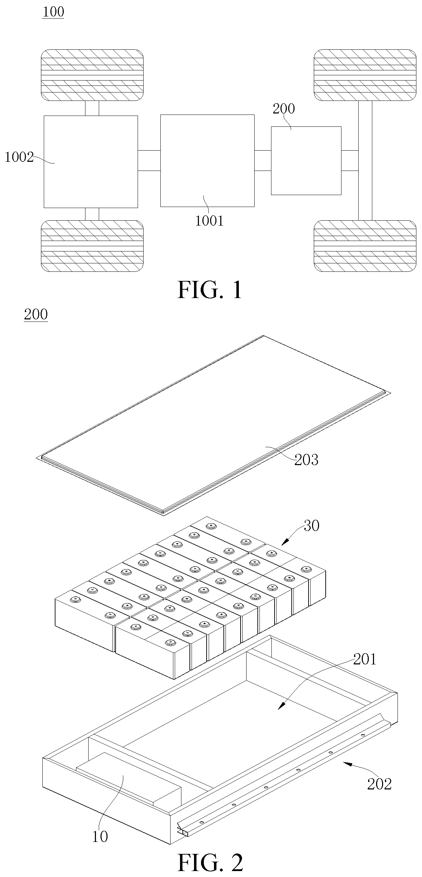

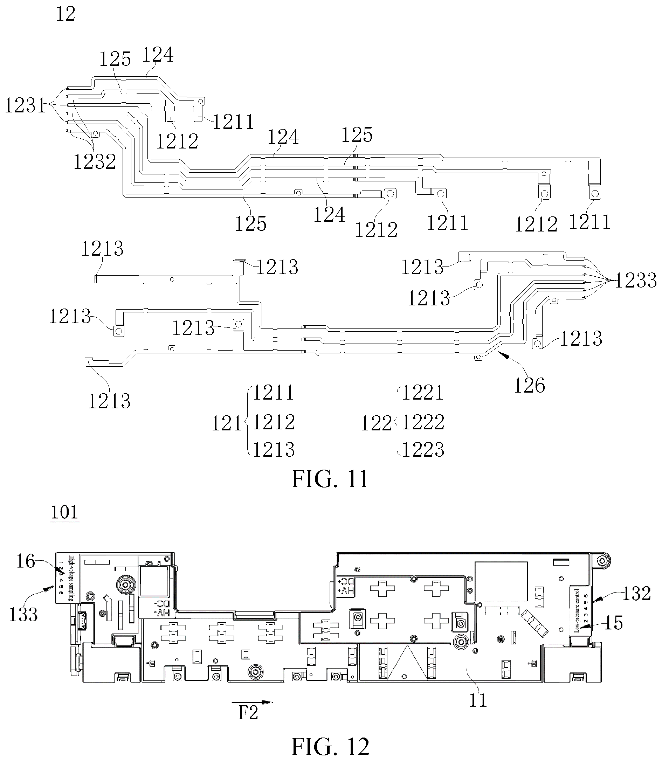

In order to make the technical problem to be solved, technical solution and beneficial effect of the present application clearer, the present application will be further described in detail below with reference to FIGS. 1 to 12 and embodiments. It should be understood that the specific embodiments described herein are only used to explain the present application and are not used to limit the present application.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. Thus, a feature defined by "first" and "second" may explicitly or implicitly indicates that the feature is singular or plural.

Reference to "an embodiment" herein means that a particular feature, structure, or characteristic described with reference to the embodiment can be included in at least some embodiments of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments in any suitable manner.

In the description of the embodiments of the present application, the term "and/or" merely describes an association relationship of associated objects, indicating that three relationships may exist, for example, A and/or B may mean that A exists alone, A and B exist simultaneously, or B exists alone. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces). "Several" means one or more unless specifically defined otherwise.

In the description of the embodiments of the present application, orientations or positional relationships indicated by the technical terms such as "center", "longitudinal", "transverse", "length", "width", "thickness", "upper", "lower", "front", "rear", "left", "right", "vertical", "horizontal", "top", "bottom", "inner", "outer", "clockwise", "counter-clockwise", "axial", "radial", "circumferential", and the like are based on orientations or positional relationships shown in the drawings, and are merely for convenience of description of the embodiments of the present application and simplified description, and do not indicate or imply that an indicated apparatus or element must have a specific orientation or be configured and operated in a specific orientation, and thus should not be construed as limitations on the embodiments of the present application.

In the description of the embodiments of the present application, unless explicitly specified and defined otherwise, the terms "mount", "couple", "connect", and "fasten" should be broadly understood, for example, they may be a fixed connection, a detachable connection, or an integral connection; or may be a mechanical connection, or an electrical connection; or may be a direct connection, or an indirect connection via an intermediate medium, or an internal communication between two elements or interaction between two elements. A person of ordinary skill in the art may understand the specific meanings of the above terms in the embodiments of the present application according to specific situations.

In the description of the embodiment of the present application, unless explicitly specified and defined otherwise, when an element is referred to as being "fixed on" or "disposed on" another element, it may be directly or indirectly on another element. When an element is referred to as being "connected to" another element, it can be directly or indirectly connected to another element.

In the description of the embodiments of the present application, unless otherwise expressly specified and defined, the technical term "adjacent to" refers to being close in position. For example, for three components A1, A2, and B, if the distance between A1 and B is greater than that between A2 and B, then A2 is closer to B compared to A1, i.e., A2 is adjacent to B, or it can be said that B is adjacent to A2. As another example, when there are a plurality of C components, namely C1, C2, ..., CN, if one of the C components, such as C2, is closer to component B compared to the other C components, then B is adjacent to C2, or it can be said that C2 is adjacent to B.

At present, in view of the development of the market, the use of power batteries is becoming increasingly more widespread. Power batteries are used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of power batteries continues to expand, a market demand for power batteries continues to increase.

With the continuous expansion of the market demand for batteries, high requirements are also placed on the manufacturing efficiency of battery devices. Generally, a battery device may include one or more battery cell assemblies for providing voltage and capacity, and the battery device further includes a high-voltage power distribution device, which is mainly used to control smooth operation of the charge/discharge circuits of the battery device, and is responsible for controlling a power-on and power-off process, a pre-charge process, and a charging process of a high-voltage electrical circuit. In the high-voltage power distribution device, the term "voltage" refers to electrical voltage. The high-voltage power distribution device is a power distribution device used to control circuits with voltages exceeding 60 V. Illustratively, the high-voltage power distribution device may be a high-voltage power distribution box, which refers to a component responsible for electrical energy distribution and management in high-voltage systems of electric apparatus. In new energy vehicles, it may be a Power Distribution Unit (PDU), wherein the functions of the PDU include power distribution and management in the vehicle's high-voltage system, providing charge/discharge control, high-voltage component power-on control, circuit overload/short-circuit protection, high-voltage sampling, low-voltage control, and other functions to protect and monitor the operation of the high-voltage system. The high-voltage power distribution box may also refer to a component used in batteries for charge/discharge control, such as a Battery Disconnect Unit (BDU), wherein the BDU implements charge/discharge control systems for batteries and is a specialized high-voltage power distribution box designed specifically for batteries.

The high-voltage power distribution device includes various electrical connection members for power distribution management and signal acquisition, and after each electrical connection member is connected to an internal component of the high-voltage power distribution device, it also needs to be connected to a connector of an external control circuit, a battery management main control system, etc. to achieve the transmission of current and signal. In the related art, each electrical connection member is typically adapted by means of a wire harness, one end of the adapted wire harness is connected to the electrical connector, and the other end is connected to an external connector, and this transmission method has problems of high maintenance cost and high failure probability due to the large number of parts, and the wire harness is complicated in wiring and occupies a large space, so that it is difficult to improve the assembly efficiency.

On this basis, an embodiment of the present application provides a high-voltage power distribution device, wherein the first housing is provided with the interface that adapts to the external electrical connector which can be adaptively plugged into the interface, the output portion of each electrical connection member is led into the internal space of the interface, each output portion is exposed to the inner wall surface of the interface, and when the external electrical connector is plugged into the interface, the connection terminal in the electrical connector is in electrical contact with the corresponding output portion, so that each electrical connection member is connected to the external circuit by using the corresponding electrical connector. As such, the output portion of each electrical connection member for connecting to the external circuit is led out into the interface, and the electrical connection is created in the form of plugging with the external electrical connector by means of the interface, and each output portion is accommodated in the interface without protruding beyond the surface of the housing main body, so that the risk of interference between the output portion and other adjacent components can be effectively reduced, and there is no need to lead out the output portions by means of an adapter or a wire, thus facilitating the simplification of the overall structure of the high-voltage power distribution device, and increasing the assembly efficiency.

The high-voltage power distribution device provided by the present application may be applied to a battery device, and the assembly efficiency and electrical reliability of the high-voltage power distribution device are improved, thereby helping improve the overall assembly efficiency and electrical performance of the battery device, and improving the practicability and economy of the battery device.

The battery device disclosed in the embodiments of the present application may be, but not limited to, used in an electric apparatus such as a vehicle, a ship, or an aircraft. The power system of the electric apparatus may incorporate batteries disclosed in the present application, among other components. As such, the overall assembly efficiency of the batteries can be effectively enhanced and manufacturing efficiency requirements can be met.

An embodiment of the present application provides an electric apparatus using a battery device as a power supply, wherein the battery device is configured to provide electric energy for the electric apparatus. The electric apparatus may be but is not limited to a mobile phone, a portable device, a notebook computer, a battery powered vehicle, an electric vehicle, a ship, a space vehicle, an electric toy, and an electric tool. For example, the space vehicle includes an airplane, a rocket, a space shuttle, and a spacecraft; the electric toy includes a fixed or movable electric toy, for example, a game console, an electric vehicle toy, an electric ship toy, and an electric airplane toy; and the electric tool includes an electric tool for metal cutting, an electric tool for grinding, an electric tool for assembly, and an electric tool for railway, for example, an electric drill, an electric grinder, an electric wrench, an electric screwdriver, an electric hammer, an electric impact drill, a concrete vibrator, and an electric planer.

The following embodiments are described using a vehicle as an example of an electric device according to one embodiment of the present application, for convenience of explanation.

With reference to FIG. 1, FIG. 1 is a schematic diagram of a structure of a vehicle 100 according to some embodiments of the present application. The vehicle 100 may be a fuel vehicle, a gas vehicle, or a new energy vehicle, and the new energy vehicle may be a battery electric vehicle, a hybrid vehicle, or a range-extended electric vehicle. Inside the vehicle 100, a battery device 200 is provided, which may be provided at the bottom, head, or tail of the vehicle 100. The battery device 200 may be used to power the vehicle 100, for example, the battery device 200 may be used as an operating power source of the vehicle 100. The vehicle 100 may further include a controller 1001 and a motor 1002, wherein the controller 1001 is used to control the battery device 200 to power the motor 1002, for example, for a working power requirement of the vehicle 100 during starting, navigating, and driving.

In some embodiments, the battery device 200 may be used not only as an operating power source for the vehicle 100, but also as a driving power source for the vehicle 100, instead of or partially instead of fuel or natural gas to provide driving power for the vehicle 100.

With reference to FIG. 2, an embodiment of the present application provides a battery device 200. The battery device 200 may include one or more battery cell assemblies 30 for providing voltage and capacity. The battery cell assembly 30 may include a plurality of battery cells, and the plurality of battery cells are connected in series, in parallel, or in series-parallel via a busbar component.

In some embodiments, the battery device 200 includes a Battery Management System (BMS), and the battery management system is a core component responsible for monitoring and managing a battery cell state, and main functions of the battery management system include monitoring parameters such as a voltage, a current, and a temperature of the battery cell in real time to ensure that the battery is in a safe working state, balancing a power of each battery cell in the battery cell assembly 30 in an active or passive manner to prolong a service life of the battery, controlling and adjusting a temperature of the battery cell to prevent performance degradation or a safety risk caused by overheating or overcooling, detecting a fault of the battery cell assembly 30 and the BMS, and taking corresponding protection measures, such as power cut-off or alarm triggering.

As an example, the battery management system may be provided in the box body 20 to support and protect the battery management system by means of the box body 20.

As an example, the battery management system may also be provided outside the box body 20 and connected to devices such as the battery cells and sensors in the box body 20 by means of wires.

In some embodiments, the battery cell assembly 30 is usually formed by arranging a plurality of battery cells. The battery cell may be a secondary battery, and the secondary battery refers to a battery cell that may be continuously used by activating an active material by charging the battery cell after discharging thereof. The battery cell may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like, without limitation for the battery cell in the embodiments of the present application.

As an example, the battery cell assembly 30 may be a battery module, and the battery module is an independent module formed by arranging and fixing a plurality of battery cells. As an example, a battery module may be formed by bundling a plurality of battery cells together using straps.

In some embodiments, the battery device 200 may be a battery pack. The battery pack includes a box body 20 and one or more battery cell assemblies 30, with the battery cell assemblies 30 accommodated within the box body 20.

As an example, the battery cell assembly 30 may be a battery module, and the battery cell assembly 30 may be accommodated in the box body 20 by fixing the battery module in the box body 20.

As an example, the battery cell assembly 30 may also be accommodated in the box body 20 by directly fixing the plurality of battery cells to the box body 20.

In some embodiments, the box body 20 has an accommodation space 201 inside to accommodate the battery cell assembly 30. The box body 20 may be made of a material with specified hardness and strength, so that the box body 20 is less likely to deform when subjected to extrusion and collision, enabling the battery to have higher structural strength and improved safety performance. The box body 20 may be made of various materials, including but not limited to aluminum, stainless steel, aluminum alloy, iron, or plastic.

In some embodiments, the box body 20 may be a part of a chassis structure of a vehicle 100. For example, a part of the box body 20 may be at least a part of a floor of a vehicle 100, or a part of the box body 20 may be at least a part of a cross beam and a side beam of the vehicle 100.

As an example, the box body 20 may include a first box body 202 and a second box body 203, the first box body 202 and the second box body 203 cover each other, and the first box body 202 and the second box body 203 jointly define the accommodation space 201 for accommodating the battery cell. The second box body 203 may be a hollow structure with an opening at one end, the first box body 202 may be a plate-shaped structure, and the first box body 202 covers an opening side of the second box body 203, so that the first box body 202 and the second box body 203 jointly define the accommodation space 201. Alternatively, the first box body 202 and the second box body 203 each may be a hollow structure with an opening at one end, and an opening side of the first box body 202 covers an opening side of the second box body 203. Certainly, the box body 20 formed by the first box body 202 and the second box body 203 may be in various shapes such as cylinder, rectangular cuboid, etc.

In some embodiments, as shown in FIG. 2, the battery device 200 may further include a high-voltage power distribution device 10, and the high-voltage power distribution device 10 may be accommodated in the accommodation space 201 of the box body 20, or may be located outside the accommodation space 201 of the box body 20. The high-voltage power distribution device 10 is electrically connected to the battery cell assembly 30, and the high-voltage power distribution device 10 is configured to control charge/discharge of the battery device 200.

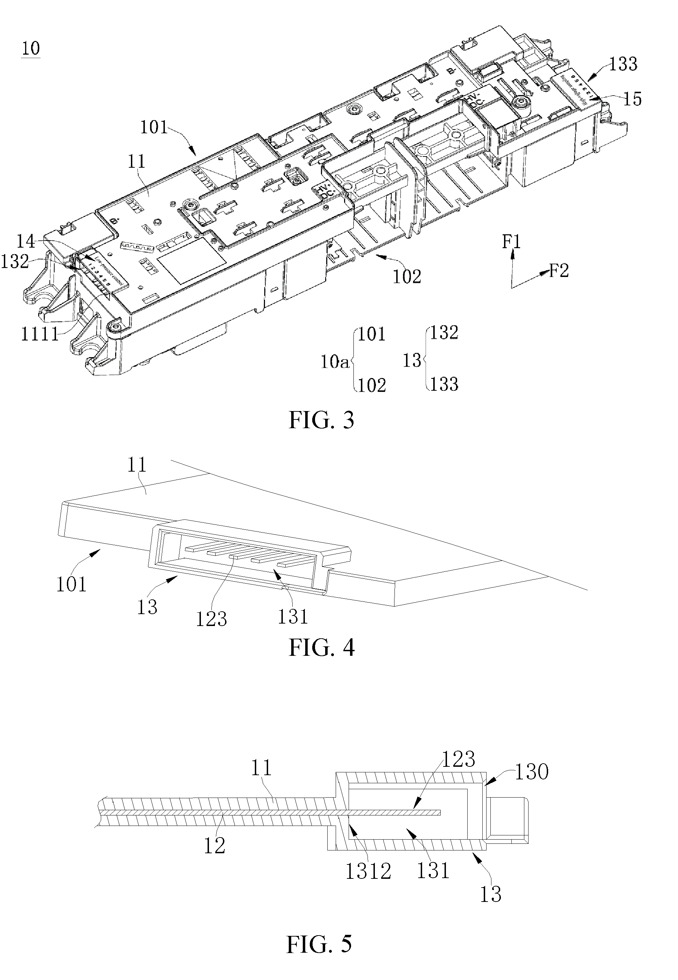

Hereafter, the high-voltage power distribution device 10 of the present application will be described in detail with reference to FIGS. 3 to 12 and specific embodiments.

With reference to FIGS. 3 to 5 and 10, an embodiment of the present application provides a high-voltage power distribution device 10 including a housing 10a, an electrical member 103, and a plurality of electrical connection members 12, wherein the electrical member 103 is provided in the housing 10a, the housing 10a includes a first housing 101, and the first housing 101 includes an insulated housing main body 11, the plurality of electrical connection members 12 are embedded in the housing main body 11, each electrical connection member 12 includes a connection portion 121 and an output portion 123, the connection portion 121 being electrically connected to an electrical member 103, the housing main body 11 is further provided with an interface 13 into which an external electrical connector can be adaptively plugged, and the output portion 123 extends to be located within the interface 13 and is configured to be electrically connected to the electrical connector plugged into the interface 13.

It can be understood that, in the embodiments of the present application, the high-voltage power distribution device 10 refers to a set of various components or assemblies configured to receive, distribute, and control electric energy in a power distribution system, and can implement electric energy distribution, and can not only properly distribute high-voltage electric energy from a power supply end to a plurality of different electric branches or loads, but also can be configured to control a circuit, for example, control on/off of the circuit, to implement distribution and management of electric energy, and can also be configured to provide a protection function in the circuit, for example, when a fault such as a circuit overload, a short-circuit, or an electric leakage occurs in the circuit, the circuit can be automatically cut off, and can also be configured to perform energy measurement and detection in the circuit, for example, measure and monitor parameters such as a current, a voltage, and power in the circuit, to learn an operating status of the circuit. Illustratively, the high-voltage power distribution device 10 may be used in a battery device for distributing and managing electric energy of battery cell assemblies in the battery device, and the high-voltage power distribution device 10 may be provided with electrical members such as a relay 1031, a circuit breaker, a contactor, a fuse, a circuit breaker, a current transformer, and a voltage transformer, to implement related control of a circuit.

In the embodiment of the present application, the high-voltage power distribution device 10 includes a first housing 101, wherein the first housing 101 may be a housing 10a of the entire high-voltage power distribution device 10, or may be a part of the structure of the housing 10a, which plays a role of protecting internal structural parts, or the first housing 101 may also be an inner housing structure of the internal space of the high-voltage power distribution device 10, to play a role of supporting the internal electrical members 103 and other structural parts. The first housing 101 includes a housing main body 11 and a plurality of electrical connection members 12, that is, the first housing 101 has at least two parts, the housing main body 11 and the electrical connection member 12, and the housing main body 11 is a main body portion of the first housing 101, which is an insulating member made of an insulating material. Each electrical connection member 12 is embedded into the housing main body 11, and a part of each electrical connection member 12 is embedded into the housing main body 11, that is, the part of each electrical connection member 12 is wrapped by the housing main body 11 and embedded into the internal space of the housing main body 11, the electrical connection members 12 are spaced apart from each other and isolated from each other, so that insulation can be implemented between the electrical connection member 12, and the housing main body 11 can also play a good protective role on the part of the internal electrical connection member 12 embedded into the housing main body 11, thereby reducing adverse effects of external environmental factors such as mechanical impact and chemical corrosion. The housing main body 11 may be made of an inorganic insulating material, an organic insulating material, or a composite insulating material. Illustratively, the material of the housing main body 11 may be ceramic, glass, mica, plastic, rubber, an epoxy glass fiber cloth composite material, or the like.

On this basis, each electrical connection member 12 includes a connection portion 121 configured to be electrically connected to the electrical member 103 of the high-voltage power distribution device 10, the connection portion 121 may be embedded inside the housing main body 11 or the connection portion 121 may also be exposed outside the housing main body 11, in some examples, the connection portion 121 is exposed outside the housing main body 11, the connection portion 121 and the corresponding electrical member 103 may be connected by welding, crimping or locking, in other examples, the connection portion 121 may be embedded inside the housing main body 11, with corresponding openings provided on both the connection portion 121 and the housing main body 11, allowing the connection portion 121 to be connected to the electrical member 103 by insertion, fastening, or similar methods, and each electrical connection member 12 further includes an output portion 123, that is, the electrical connection member 12 includes at least two portions, namely, the connection portion 121 and the output portion 123, and the output portion 123 is configured to be connected to an external circuit. As such, the electrical connection member 12 can be tightly combined with the housing main body 11, so that the electrical connection member 12 can be stably and firmly mounted on the housing main body 11, and the function of electrical connection between the electrical member 103 inside the high-voltage power distribution device 10 and the external circuit can be achieved by means of the connection portion 121 and the output portion 123.

It can be understood that the electrical members 103 in the high-voltage distribution box body include, but are not limited to, a main relay, a pre-charge relay, a pre-charge resistor, a fuse, a current sensor, and other various connection members, connection pieces, or connection points for electrical connection.

In the present embodiment, the housing main body 11 is further provided with an interface 13 into which an external electrical connector can be adaptively plugged, and the output portion 123 of each electrical connection member 12 for connecting to the external circuit of the high-voltage power distribution device 10 extends into the interface 13, as such, the first housing 11 is provided with the interface 13 that adapts to the external electrical connector which can be adaptively plugged into the interface 13, the output portion 123 of each electrical connection member 12 is led into the internal space of the interface 13, each output portion 123 is exposed to the inner wall surface of the interface 13, and when the external electrical connector is plugged into the interface 13, the connection terminal in the electrical connector is in electrical contact with the corresponding output portion 123, so that each electrical connection member is connected to the external circuit by using the corresponding electrical connector.

An embodiment of the present application provides a high-voltage power distribution device 10, wherein the first housing 101 is provided with the interface 13 that adapts to the external electrical connector which can be adaptively plugged into the interface 13, the output portion 123 of each electrical connection member is led into the internal space of the interface 13, each output portion 123 is exposed to the inner wall surface of the interface 13, and when the external electrical connector is plugged into the interface 13, the connection terminal in the electrical connector is in electrical contact with the corresponding output portion 123, so that each electrical connection member 12 is connected to the external circuit by using the corresponding electrical connector. As such, the output portion 123 of each electrical connection member 12 for connecting to the external circuit is led out into the interface 13, and the electrical connection is created in the form of plugging with the external electrical connector by means of the interface 13, and each output portion 123 is accommodated in the interface 13 without protruding beyond the surface of the housing main body 11, so that the risk of interference between the output portion 123 and other adjacent components can be effectively reduced, and there is no need to lead out the output portions 123 by means of an adapter or a wire, thus facilitating the simplification of the overall structure of the high-voltage power distribution device 10, and increasing the assembly efficiency.

In some embodiments, as shown in FIGS. 3 to 5, the interface 13 has a cavity 131 penetrating through a surface of the housing main body 11, and the output portion 123 is exposed to a cavity wall of the cavity 131.

In the embodiments of the present application, the interface 13, serving as the connection portion 121 for linking and interacting between the internal electrical members 103 of the high-voltage power distribution device 10 and external circuits, is provided with a cavity 131, the cavity 131 can accommodate the output portion 123 of each electrical connection member 12, the output portion 123 is accommodated in a space defined by the cavity 131, the external connector can be positioned and connected to the interface 13 by means of the cavity 131, the cavity 131 can also play a role of protecting the output portion 123, and the output portion 123 is exposed to a surface of the cavity wall 131, so that the output portion 123 can be in contact with a terminal, a pin, a contact or the like in the electrical connector plugged into the cavity 131 to achieve an electrical connection. In addition, the cavity 131 penetrates through the side wall of the housing main body 11, so that the external electrical connector can be directly plugged into the housing main body 11 and connected to the housing main body 11, thereby helping improve connection reliability and stability between the external electrical connector and the interface 13, and improving the stability and reliability of electric energy transmission.

In some embodiments, as shown in FIGS. 3 to 5, the interface 13 is a groove recessed in an outer wall surface of the housing main body 11.

In the present embodiment, the interface 13 is in the form of a groove, wherein the groove is a structure formed by inwardly recessing the outer wall surface of the housing main body 11, and the interface 13 in the form of a groove may be integrally formed when the housing main body 11 is formed, or a pit region may be dug out on the wall surface of the housing main body 11 by punching, cutting, or the like after the housing main body 11 is formed, to serve as the interface 13. As such, the interface 13 is designed in the form of a groove, and compared with other interfaces 13 directly exposed to the outside, the groove wall of the groove can provide certain protection for the internal output portion 123, and when the external electrical connection matched with the groove is plugged into the groove, the surrounding wall surfaces can reduce the interference and erosion of external impact, dust, water vapor, etc. on the connection portion 121 to a certain extent, which is helpful to maintain the stability and reliability of the connection and prolong the service life of the connection portion 121 and the entire device. Moreover, the shape and size of the groove can limit the position of the connector connected thereto by design, so that the connector is not prone to loosening, displacement, etc., and the normal performance of various functions after connection is guaranteed.

In some embodiments, as shown in FIGS. 3, 4, and 10, the housing 10a further includes a second housing 102, the electrical member 103 is provided on the second housing 102, the first housing 101 is connected to a side of the second housing 102 in the first direction, and the interface 13 is provided on a side of the housing main body 11 in a direction perpendicular to the first direction.

In the present embodiment, in addition to the first housing 101, the housing 10a further includes a second housing 102, the second housing 102 and the first housing 101 are connected to form a housing structure, the electrical members 103 are provided in the second housing 102, the second housing 102 provides mounting and accommodation spaces for the electrical members 103, and the first housing 101 is connected to a side of the second housing 102 in the first direction, wherein the first direction may be a thickness direction of the first housing 101, for example, a direction shown by an arrow F1 in the figure, and the interface 13 is provided on a side of the housing main body 11 in a direction perpendicular to the first direction (for example, a direction shown by an arrow F2 in the figure), so that the interface 13 can avoid a connection region between the first housing 101 and the second housing 102, thereby reducing structural interference, and facilitating a plugging/unplugging operation of an external connector.

In some other embodiments, the interface 13 may alternatively be provided on a top that is of the housing main body 11 and that is away from the second housing 102 in the first direction. As such, the interface 13 is provided on the top of the housing main body 11 in the direction perpendicular to the first direction and is provided away from the second housing 102, so that the interface 13 can also effectively avoid the connection region between the first housing 101 and the second housing 102, thereby reducing structural interference and facilitating plugging/unplugging of the external connector.

In some embodiments, as shown in FIGS. 3, 4 and 10, an opening 130 of the interface 13 is provided toward a direction intersecting the first direction.

The position of the opening 130 of the interface 13 determines the direction in which the external electrical connector is plugged into the interface 13, and the opening 130 is arranged in the direction intersecting the first direction, so that the electrical connector is plugged into the interface 13 in the direction intersecting the first direction, that is, the direction intersecting the assembling direction of the first housing 101 and the second housing 102, the electrical connector can be plugged to effectively avoid the connection region between the first housing 101 and the second housing 102, and the interference risk is reduced; meanwhile, when structures such as a liquid cooling plate are externally set in the first direction of the high-voltage power distribution device 10, a sidewall of the interface 13 can also shield the opening 130 of the interface 13 in the first direction, thereby also reducing the risk of condensation entering the interface 13.

In a specific embodiment, the opening 130 of the interface 13 is oriented perpendicular to the first direction.

In some embodiments, as shown in FIGS. 4 to 8, the output portions 123 are spaced apart and protruded in the interface 13, and are provided toward the opening 130 of the interface 13.

In the embodiments of the present application, the output portion 123 is suspended in the cavity 131 of the interface 13, so that the interface 13 as a whole can be used as a male connector to be adaptively plugged into an external female connector, the overall structure of the interface 13 is simpler, and the connection mode with the external electrical connector is also more direct.

In some embodiments, as shown in FIGS. 4 to 6, a spacing distance a1 between two adjacent output portions 123 is greater than 3 mm.

In a specific embodiment, in the interface 13, the spacing distance between two adjacent output portions 123 is greater than 3 mm, that is, when the two adjacent output portions 123 are not separated by an insulating member, an electrical gap is greater than 3 mm, to meet an electrical safety requirement.

Illustratively, the spacing distance between two adjacent output portions 123 may be 4 mm, 5 mm, 6 mm, 7 mm, 8 mm, 9 mm, etc., or when the output portions 123 are connected in the high-voltage loop, the electrical gap between two adjacent output portions 123 may be 9.5 mm, 10 mm, 11 mm, or even larger.

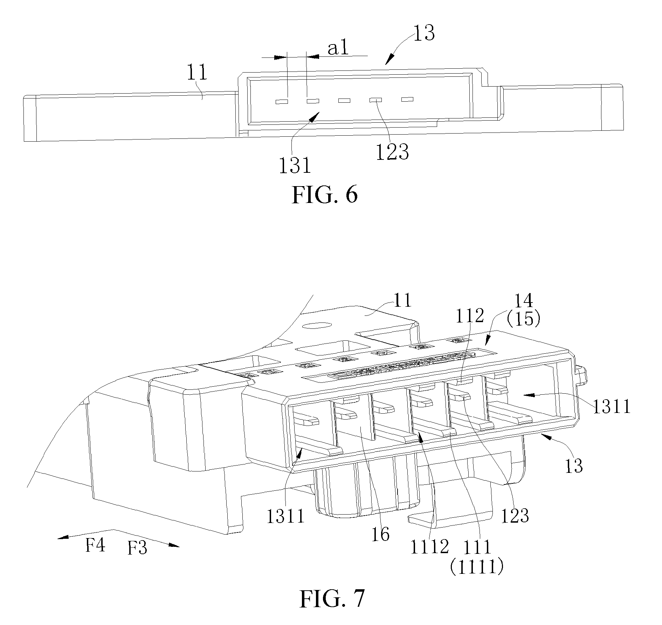

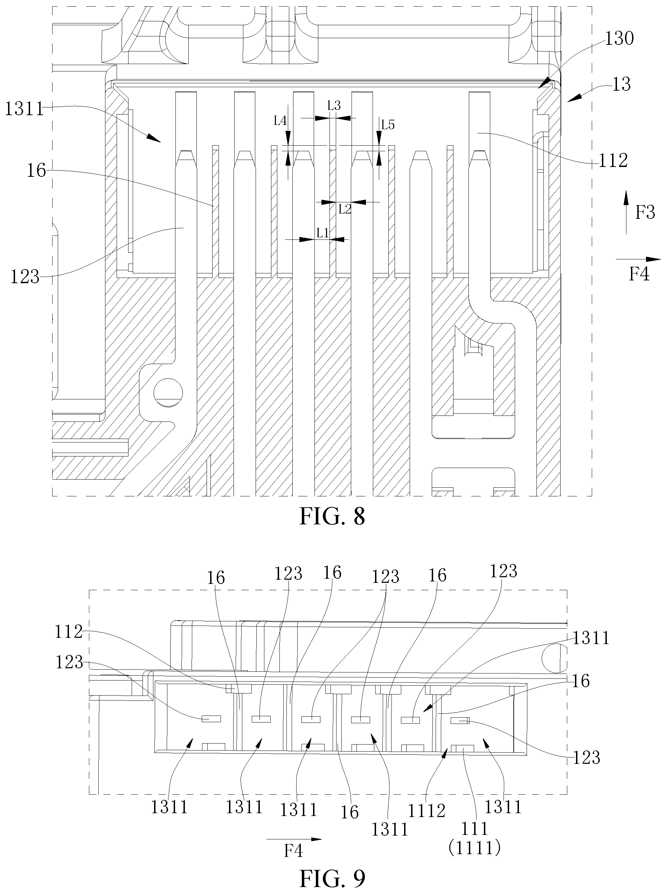

In some other embodiments, as shown in FIGS. 7 and 8, an insulating portion 16 is further provided between two adjacent output portions 123, and the two adjacent output portions 123 are electrically isolated by means of the insulating portion 16.

As such, the insulating portion 16 is provided between two adjacent output portions 123, and the two output portions 123 are electrically isolated by means of the insulating portion 16, especially for some cases of higher voltage, the insulating portion 16 can be provided to effectively shorten the spatial distance between the two adjacent output portions 123, thereby helping to reduce the size of the interface 13 and make the structure of the interface 13 more compact.

In some embodiments, as shown in FIGS. 7 to 9, a peripheral side wall of the insulating portion 16 is fitted and connected to each inner side wall of the interface 13, and the insulating portion 16 divides an internal space of the interface 13 into a plurality of sub-regions 1311, wherein one of the sub-regions 1311 is correspondingly provided with one of the output portions 123.

In the present embodiment, it can be understood that the insulating portion 16 is a platelike or sheet-like structure having a certain thickness, and the peripheral side wall of the insulating portion 16 refers to a portion of the side surface surrounding a peripheral edge of the insulating portion 16. The peripheral side wall of the insulating portion 16 is fitted and connected with each inner side wall of the interface 13, which means that the peripheral side wall of the insulating portion 16 located in the internal space of the interface 13 is fitted and connected with the inner side wall of the corresponding interface 13, and there is no gap between the walls that are fitted and connected with each other, so that the insulation performance of the insulating portion 16 can be used to effectively block the current and reduce the risk of electric leakage.

As such, the internal space of the interface 13 is divided into a plurality of sub-regions 1311 by the insulating portion 16, one output portion 123 is correspondingly provided in one sub-region 1311, and the output portions 123 in two adjacent sub-regions 1311 are effectively separated by the insulating portion 16, thereby reducing the risk of electrical interference generated in the two adjacent sub-regions 1311, and further improving the electrical safety of the interface 13.

It should be noted that, in a specific embodiment, the number of sub-regions 1311 is determined by the number of insulating members and the number of the output portions 123, and by setting a suitable number of insulating members, the internal space of the interface 13 is divided into a suitable number of sub-regions 1311, so that each sub-region 1311 is correspondingly provided with exactly one output portion 123, or the number of the sub-regions 1311 is greater than that of the output portions 123, and one or more sub-regions 1311 are not provided with the output portion 123, and the sub-region 1311 not provided with an output portion 123 may be used as a spare space on the one hand, and may also be used as a guide space on the other hand, to adapt to the structure on the external connector and guide the connector to connect to the interface 13.

In some embodiments, as shown in FIGS. 7 to 9, the interface 13 has a first wall surface 1312 provided directly opposite to the opening 130, the output portion 123 and the insulating portion 16 both protrude from the first wall surface 1312, and a protruding dimension of the insulating portion 16 is greater than that of the two adjacent output portions 123.

As such, the protruding dimension of the insulating portion 16 is greater than that of the two adjacent output portions 123, enabling the insulating portion 16 to more comprehensively cover and separate the adjacent output portions 123 in space. Current must climb over the corresponding insulating portion 16 to travel from one output portion 123 to the other, thereby achieving insulation.

In a specific embodiment, as shown in FIGS. 7 to 9, the plurality of output portions 123 are sequentially arranged at intervals in a direction perpendicular to a direction (a direction shown by an arrow F3 in the figure) in which the first wall surface 1312 points to the opening 130, the insulating portion 16 is provided parallel to the output portions 123, spacing distances between the insulating portion 16 and two adjacent output portions 123 in the direction (a direction shown by an arrow F4 in the figure) perpendicular to the direction in which the first wall surface 1312 points to the opening 130 are L1 and L2, respectively, a thickness of the insulating portion 16 is L3, and protruding dimensions of the insulating portion 16 relative to the two adjacent output portions 123 in the direction in which the first wall surface 1312 points to the opening 130 are L4 and L5, respectively, wherein a sum of L1, L2, L3, L4, and L5 is greater than 3 mm.

In the present embodiment, as shown in FIGS. 7 to 9, when one insulating portion 16 is provided between two adjacent output portions 123, a creepage distance between the two adjacent output portions 123 includes a spacing distance dimension L1 between the insulating portion 16 and one adjacent output portion 123, a spacing distance dimension L2 between the insulating portion 16 and the other adjacent output portion 123, a thickness dimension L3 of the insulating portion 16, a protruding dimension L4 of the insulating portion 16 relative to one adjacent output portion 123, and a protruding dimension L5 of the insulating portion 16 relative to the other adjacent output portion 123, and the sum of the five dimensions is greater than 3 mm, so that the creepage distance between the two adjacent output portions 123 after being separated by means of the insulating portion 16 meets the requirement of being greater than 3 mm.

In a specific embodiment, when the two electrical connection members 12 corresponding to the two adjacent output portions 123 are connected in a low-voltage loop, a creepage distance between the two output portions 123 is greater than 3 mm to meet the insulation requirements.

Illustratively, the creepage distance between two adjacent output portions 123 may be 4 mm, 5 mm, 6 mm, 7 mm, 8 mm, 9 mm, or the like.

In some other embodiments, a sum of L1, L2, L3, L4 and L5 is greater than 9.5 mm, that is, the creepage distance between two adjacent output portions 123 is greater than 9.5 mm.

As such, when the two electrical connection members 12 corresponding to the two adjacent output portions 123 are connected in a loop with a higher voltage, a creepage distance between the two output portions 123 is greater than 9.5 mm to meet the insulation requirements.

Illustratively, when two adjacent electrical connection members 12 are connected to a loop with a voltage greater than 220 V and less than or equal to 660 V, the creepage distance between two adjacent output portions 123 may be 9.6 mm, 10 mm, 10.5 mm, 11 mm, 12 mm, 13 mm, 14 mm, 15 mm, 16 mm, 17 mm, 18 mm, or the like.

In some other embodiments, a sum of L1, L2, L3, L4 and L5 is greater than 19 mm, that is, the creepage distance between two adjacent output portions 123 is greater than 9.5 mm.

As such, when two adjacent electrical connection members 12 are connected in a larger voltage loop, a creepage distance between the two output portions 123 is greater than 19 mm to meet the insulation requirements.

Illustratively, when two adjacent electrical connection members 12 are connected to a loop with a voltage greater than 660 V, the creepage distance between two adjacent output portions 123 may be a larger size such as 19.1 mm, 19.5 mm, 19.8 mm, 20 mm, 20.5 mm, 21 mm, 21.5 mm, 22 mm, 22.5 mm, or 23 mm.

In some embodiments, as shown in FIGS. 7 and 9, the housing main body 11 is further provided with a guide structure 111, and the guide structure 111 is configured to guide an external electrical connector to be adaptively plugged into the interface 13.

The guide structure 111 is a structure for guiding an external connector to be plugged into the interface 13. The guide structure 111 may be a structure directly provided in the interface 13, or may be an independent structural member on the housing main body 11, and is mounted at the interface 13 by bonding, plugging, or the like.

The guide ribs 1111 are provided in the interface 13 to cooperate with the corresponding structures on the external electrical connector, which facilitates plugging of the external electrical connector, can improve the connection efficiency of the external electrical connector to a certain extent, and simplify the connection operation.

In a specific embodiment, as shown in FIGS. 7 and 9, the guide structure 111 includes guide ribs 1111 protruding from an inner wall surface of the interface 13, and the guide ribs 1111 are provided in parallel with the output portion 123. As such, the guide ribs 1111 in the same direction as the extending direction of the output portion 123 is provided in the interface 13, and the guide ribs 1111 guide the external electrical connector to be plugged and removed along the protruding direction of the output portion 123.

In a specific embodiment, as shown in FIGS. 7 and 9, in an arrangement direction of the output portions 123 (the direction shown by the arrow F4 in the figure), at least one side of each insulating portion 16 is provided with a guide rib 1111, and the guide rib 1111 is arranged in parallel with the insulating portion 16 at intervals and forms a guide groove 1112 with the adjacent insulating portion 16. The guide groove 1112 may be configured to cooperate with a protrusion structure provided on an external electrical connector, to further guide the electrical connector to be plugged into a board in the extension direction of the output portion 123.

In some embodiments, as shown in FIGS. 7 and 8, a plurality of reinforcing ribs 112 are further provided in parallel and spaced apart on the inner wall surface of the interface 13, and the reinforcing ribs 112 and the guide ribs 1111 are arranged in parallel and spaced apart. The structural strength of the interface 13 is improved by providing the reinforcing rib 112 on the side wall of the interface 13.

In some embodiments, as shown in FIGS. 3, 7, and 10 to 13, the electrical connection member 12 includes a first connection member 124 and a second connection member 125, the interface 13 includes a first interface 132 for an external first connector to be adaptively plugged, the connection portion 121 includes a first connection portion 1211 and a second connection portion 1212,the output portion 123 includes a first output portion 1231 and a second output portion 1232, the first connection portion 1211 and the first output portion 1231 are provided on the first connection member 124 at intervals, the second connection portion 1212 and the second output portion 1232 are provided on the second connection member 125 at intervals, the first connection portion 1211 and the second connection portion 1212 are electrically connected to the different electrical members 103, respectively, and the first output portion 1231 and the second output portion 1232 both extend into the first interface 132 and are configured to be electrically connected to the first connector.

In the present embodiment, the electrical connection member 12 includes two connection members with different functions, namely, a first connection member 124 and a second connection member 125, the first connection member 124 includes a first connection portion 1211 and a first output portion 1231, the second connection member 125 includes a second connection portion 1212 and a second output portion 1232, the first connection member 124 is electrically connected to one connection terminal of one electrical member 103 of the high-voltage power distribution device 10 by means of the first connection portion 1211, and is electrically connected to one connection terminal or pin or contact in the external electrical connector by means of the first output portion 1231, and on this basis, the second connection member 125 is electrically connected to the other connection terminal of the same electrical member 103 of the high-voltage power distribution device 10 by means of the second connection portion 1212, and is electrically connected to the other connection terminal or pin or contact in the external electrical connector by means of the second output portion 1232, so that the first connection member 124 and the second connection member 125 are used in cooperation to connect the electrical connection connected thereto to the external circuit, and achieve the current transmission between the external circuit and the electrical member 103.

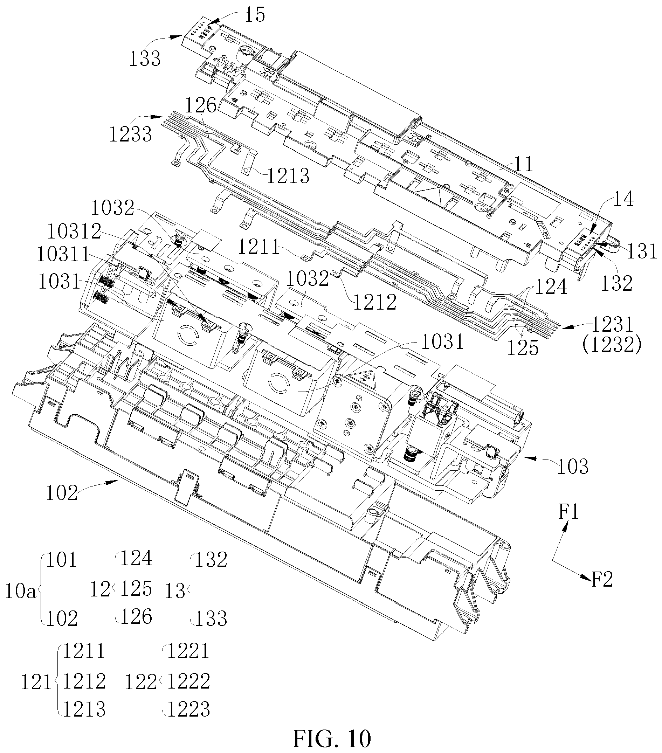

**In** a specific embodiment, as shown in FIG. 10, there are a plurality of first connection members 124, there are a plurality of second connection members 125, and the number of the first connection members 124 is equal to that of the second connection members 125. As such, the first connection member 124 and the second connection member 125 are used in groups to connect different electrical members 103 to an external circuit.

In a specific embodiment, the first output portions 1231 of the plurality of first connection members 124 and the second output portions 1232 of the plurality of second connection members 125 are alternately arranged at intervals. That is, the plurality of output portions 123 are arranged at intervals in a staggered manner by installing one first output portion 1231, one second output portion 1232, one first output portion 1231, and one second output portion 1232, so that two adjacent output portions 123 can be used to connect the same electrical member 103 to the same external circuit.

In other embodiments, as shown in FIGS. 7 to 9, the first output portions 1231 of the plurality of first connection members 124 are arranged continuously at intervals, and the second output portions 1232 of the plurality of second connection members 125 are arranged continuously at intervals. That is, the plurality of first output portions 1231 are collectively provided in one region, and the plurality of second output portions 1232 are collectively provided in another region, so that it is convenient to distinguish the first output portions 1231 and the second output portions 1232, and to perform inspection, maintenance, management, and the like on the first output portions 1231 or the second output portions 1232 in a centralized manner.

In some embodiments, as shown in FIG. 10, the electrical member 103 includes a relay 1031, the relay 1031 has a first terminal 10311 and a second terminal 10312 electrically connected to two opposite ends of a coil, respectively, the first connection portion 1211 is electrically connected to the first terminal 10311 correspondingly, and the second connection portion 1212 is electrically connected to the second terminal 10312 correspondingly.

It can be understood that the relay 1031 is a switching apparatus, and is mainly configured to control switching of a circuit, so that the circuit can operate normally. The relay 1031 includes a coil which can generate a magnetic field or achieve functions such as electromagnetic induction when energized, the relay 1031 further has a first terminal 10311 and a second terminal 10312, the first terminal 10311 and the second terminal 10312 are used to be connected to a positive electrode and a negative electrode of an external power supply device to supply power to the coil, wherein the coil, the first terminal 10311 and the second terminal 10312 are all electrical members 103.

As such, the first connection portion 1211 of the first connection member 124 is electrically connected to the first terminal 10311 correspondingly, the second connection portion 1212 of the second connection member 125 is electrically connected to the second terminal 10312 correspondingly, and the corresponding first output portion 1231 and second output portion 1232 are electrically connected to the electrical connector of the external power supply, so that the external power supply and the coil of the relay 1031 can be connected, thereby supplying power to the coil by using the external power supply.

In some embodiments, the relay 1031 includes at least one of a main positive relay, a main negative relay, and a pre-charge relay.

In a specific embodiment, the high-voltage power distribution device 10 may include any one or more of a main positive relay, a main negative relay, and a pre-charge relay, or may include a plurality of main positive relays, a plurality of main negative relays, and a plurality of pre-charge relays. In addition, the number of the first connection members 124 and the number of the second connection members 125 are both greater than or equal to that of the relays 1031, so that each relay 1031 can be connected to the external power supply by means of a set of the first connection member 124 and the second connection member 125.

In some examples, as shown in FIG. 10, the relay 1031 may include a main relay and a pre-charge relay, etc., wherein the main relay includes a main positive relay configured to be provided on a positive side of the high-voltage system and a main negative relay configured to be provided on a negative side of the high-voltage system, and in the high-voltage system, the automatic control of the circuit may be achieved by controlling the on/off state of the main relay.

In some other embodiments, the relay 1031 may further include a pre-charge relay, and in the battery device, the pre-charge relay is a relay 1031 that controls switching on/off of a pre-charge circuit, that is, before the main relay works, the pre-charge circuit is connected to perform self-test. The pre-charge relay can play a role of pre-charge in the circuit, and the capacitor can be fully charged by pre-charge when the electric device such as a vehicle is started, and the charge of the capacitor is slowly released into the switch circuit when the system switch is started to reduce the load and voltage drop of the switch. The pre-charge relay controls the charge/discharge process of the capacitor, thereby achieving smoother electric energy transmission and a longer battery life.

In some embodiments, as shown in FIGS. 3, 7, and 10 to 13, the electrical connection member 12 further includes a plurality of third connection members 126, the interface 13 further includes a second interface 133 into which an external second connector can be adaptively plugged, and the electrical member 103 further includes a plurality of high-voltage sampling members 1032, wherein the connection portion 121 further includes a third connection portion 1213, the output portion 123 includes a third output portion 1233, each third connection member 126 is provided with a third output portion 1233 and at least one third connection portion 1213 at intervals, each third connection portion 1213 is connected to the high-voltage sampling member 1032 in one-to-one correspondence, and each third output portion 1233 extends into the second interface 133 and is configured to be electrically connected to the second connector.

In the present embodiment, the third connection portion 1213 of each third connection member 126 is connected to the high-voltage loop in a high-voltage power distribution device 10, and is electrically connected to each high-voltage sampling member 1032 provided in the high-voltage loop to acquire voltage information at a corresponding position of the high-voltage loop, and the second interface 133 may be configured to be adaptively plugged with an external second connector, wherein the second connector may be a connector provided in a control system of the battery device, such as a connector provided in a battery management system to transmit a correspondingly acquired voltage signal to the external control system by means of the third output portion 1233. As such, the second interface 133 is provided on the housing main body 11, and the third output portion 1233 of the third connection member 126 for connecting each high-voltage sampling point is extended into the second interface 133 to be connected to the electrical connector of the external control system by means of the second interface 133, thereby achieving the transmission of a voltage signal. Meanwhile, the first interface 132 and the second interface 133 can spatially distinguish and isolate electrical connection members 12 of different functions, which also helps reduce the risk of electrical interference and connection errors.

Illustratively, the high-voltage sampling member 1032 may include a high-voltage sampling copper busbar, and the first connection portion 1211 is connected to the high-voltage sampling copper busbar in the high-voltage power distribution device 10, for example, connected to a high-voltage busbar linking an output terminal of the battery cell assembly, or connected to a high-voltage busbar linking an input terminal of the battery cell assembly, or connected to a high-voltage busbar linking a high-voltage contact of the relay 1031.

In some embodiments, as shown in FIGS. 9 and 10, one third connection member 126 includes one third connection portion 1213, and one third connection member 126 is electrically connected to one high-voltage sampling member 1032 in one-to-one correspondence.

In the embodiments of the present application, one third connection member 126 includes one third connection portion 1213, and one third connection member 126 is electrically connected to one high-voltage sampling member 1032 by means of one third connection portion 1213, so that the voltage signals at the high-voltage sampling positions are led out in one-to-one correspondence, one high-voltage sampling position corresponds to one high-voltage sampling member 1032 and one third connection member 126, the number of the third connection members 126 is equal to that of the high-voltage sampling members 1032, and the number of the third output portions 1233 is equal to that of the high-voltage sampling positions.

Illustratively, when there are three high-voltage sampling points in the high-voltage distribution box body, the second interface 133 correspondingly has three third output portions 1233, or when there are five or six high-voltage sampling points in the high-voltage distribution box body, the second interface 133 correspondingly has five or six third output portions 1233.

In some other embodiments, as shown in FIGS. 9 and 10, one third connection member 126 includes two third connection portions 1213 spaced apart from each other, the two third connection portions 1213 are correspondingly connected to the two high-voltage sampling members 1032, respectively, and one third connection member 126 is electrically connected to the two high-voltage sampling members 1032 correspondingly.

In the embodiments of the present application, one third connection member 126 includes two third connection portions 1213, one third connection member 126 is electrically connected to one high-voltage sampling member 1032 by means of one third connection portion 1213, and is electrically connected to the other high-voltage sampling member 1032 by means of the other third connection portion 1213, wherein the voltage signals of two high-voltage sampling positions connected by two different third connection portions 1213 on the same third connection member 126 do not need to be acquired at the same time, and thus, the voltage signals at each high-voltage sampling position can also be led out by means of the third output portions 1233 of each third connection member 126 in one-to-one correspondence.

In some embodiments, the high-voltage power distribution device 10 has a main circuit and a pre-charge circuit, one of the third connection portions 1213 provided on the same third connection member 126 is electrically connected to the high-voltage sampling member 1032 provided in the main circuit, and the other third connection portion 1213 is electrically connected to the high-voltage sampling member 1032 provided in the pre-charge circuit. As such, the pre-charge circuit and the main circuit are not simultaneously turned on, one of the two third connection portions 1213 on the same third connection member 126 is electrically connected to one high-voltage sampling point on the main circuit, the other is electrically connected to one high-voltage sampling member on the pre-charge circuit, the two sampling positions correspondingly connected to the two third connection portions 1213 are not simultaneously sampled, and the two third connection portions 1213 are not simultaneously turned on. As such, the high-voltage sampling members 1032 at the two high-voltage sampling positions that do not need to be sampled simultaneously in the pre-charge circuit and the main circuit are connected to different third connection portions 1213 on the same third connection member 126, thereby reducing the number of third connection members 126 and helping to simplify the structure.

In some embodiments, the first interface 132 and the second interface 133 are spaced apart from each other, and a spacing distance between the first interface 132 and the second interface 133 is greater than 9.5 mm.

As such, when the third connection member 126 is connected to a loop with a higher voltage, the creepage distance between the first interface 132 and the second interface 133 is greater than 9.5 mm, to meet the insulation requirement.

Illustratively, when the third connection member 126 is connected to a loop with a voltage greater than 220 V and less than or equal to 660 V, the creepage distance between the first interface 132 and the second interface 133 may be 9.6 mm, 10 mm, 10.5 mm, 11 mm, 12 mm, 13 mm, 14 mm, 15 mm, 16 mm, 17 mm, 18 mm, or the like.

In some other embodiments, a spacing distance between the first interface 132 and the second interface 133 is greater than 19 mm.

As such, when the third connection member 126 is connected to a loop with a higher voltage, the creepage distance between the first interface 132 and the second interface 133 is greater than 19mm, to meet the insulation requirement.

Illustratively, when the third connection member 126 is connected to a loop with a voltage greater than 660 V, the creepage distance between the first interface 132 and the second interface 133 may be a larger size such as 19.1 mm, 19.5 mm, 19.8 mm, 20 mm, 20.5 mm, 21 mm, 21.5 mm, 22 mm, 22.5 mm, or 23 mm.

In some embodiments, the first interface 132 and the second interface 133 are located on the same side of the housing main body 11.

In the embodiment, the first interface 132 and the second interface 133 are arranged on the same side of the housing main body 11, that is, the first interface 132 and the second interface 133 are plugged with different external electrical connectors on the same side of the high-voltage power distribution device 10, which facilitates centralized connection with the external electrical connector, helps to simplify the layout of external connection lines, reduces line crossing and confusion, and improves the regularity and reliability of connection.

It may be understood that, when the first interface 132 and the second interface 133 are provided on a same side of the housing main body 11, the first interface 132 and the second interface 133 need to meet requirements of an electrical clearance and a creepage distance, so that the first interface 132 and the second interface 133 cannot be electrically connected.

In some other embodiments, as shown in FIGS. 3 and 10 to 12, different from the above-mentioned embodiments, the housing main body 11 has a plurality of different side parts, and the first interface 132 and the second interface 133 are located on different sides of the housing main body 11, for example, the first interface 132 and the second interface 133 are located on two adjacent sides of the housing main body 11, or the first interface 132 and the second interface 133 are located on two opposite sides of the housing main body 11.

In the present embodiment, the first interface 132 and the second interface 133 are provided on different sides of the housing main body 11, that is, the first interface 132 is provided on one side of the housing main body 11, the second interface 133 is provided on the other side of the housing main body 11, and the first interface 132 and the second interface 133 are spatially located on different sides of the housing main body 11, so that the first interface 132 and the second interface 133 can better adapt to connection requirements of external electrical connectors at different locations, and the connection is more flexible and convenient.

It may be understood that, when the first interface 132 and the second interface 133 are provided on different sides of the housing main body 11, the first interface 132 and the second interface 133 also need to meet requirements of an electrical clearance and a creepage distance, so that the first interface 132 and the second interface 133 cannot be electrically connected.

In some embodiments, as shown in FIGS. 3 and 10 to 12, the first interface 132 and the second interface 133 are provided at two opposite ends of the housing main body 11.

It can be understood that the two opposite ends of the housing main body 11 refer to two ends of the housing main body 11 in the length direction (the direction shown by the arrow F2 in the figure).

As such, the first interface 132 and the second interface 133 are provided at two ends of the housing main body 11 that have a relatively large spacing distance, so that the first interface 132 and the second interface 133 are spatially separated by a considerable interval, which help to reduce mutual interference between the first interface 132 and the second interface 133 on the one hand, and also helps to optimize a layout of the first connection member 124, the second connection member 125, and the third connection member 126 in the housing main body 11 on the other hand, so that an internal structure of the first housing 101 is more orderly and compact.

In some embodiments, as shown in FIGS. 3 and 10 to 12, the housing main body 11 is further provided with a first identification portion 14 and a second identification portion 15, the first identification portion 14 is provided on a side of the first interface 132, the second identification portion 15 is provided on a side of the second interface 133, and the first identification portion 14 and the second identification portion 15 have different identification contents.

As such, the first identification portion 14 and the second identification portion 15 are respectively provided near the first interface 132 and the second interface 133, and the two identification portions are provided with different identification information, so that the user can distinguish the first interface 132 and the second interface 133 by the corresponding identification information.

Illustratively, each first connection member 124 and second connection member 125 corresponding to the first interface 132 are connected to the low-voltage control loop, the identifier of the first identification portion 14 may be "low-voltage control interface 13", each third connection member 126 corresponding to the second interface 133 is connected to the high-voltage sampling loop, and the identifier of the second identification portion 15 may be "high-voltage sampling interface 13".

Another embodiment of the present application further provides a battery device 200, as shown in FIG. 2, including a box body 20, a battery cell assembly 30 and the above-mentioned high-voltage power distribution device 10, wherein both the battery cell assembly 30 and the high-voltage power distribution device 10 are provided in the box body 20. The high-voltage power distribution device 10 is electrically connected to the battery cell assembly 30, and the high-voltage power distribution device 10 is configured to control charge/discharge of the battery device 200.

Another embodiment of the present application further provides an electric apparatus, as shown in FIG. 1, the electric apparatus includes the battery device 200, and the battery device 200 is configured to supply electric energy to the electric apparatus.

The above descriptions of the various embodiments tend to emphasize differences between the various embodiments. For same or similar parts thereof, refer to these embodiments. For brevity, details are not described herein again.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A high-voltage power distribution device, comprising:
a housing;
an electrical member provided in the housing; and
a plurality of electrical connection members, wherein
the housing comprises a first housing body, and the first housing body comprises an insulated housing main body; the plurality of electrical connection members are arranged spaced apart from one another and are embedded in the housing main body; each electrical connection member comprises a connection portion and an output portion, the connection portion being electrically connected to an electrical member; and the housing main body is further provided with an interface into which an external electrical connector can be adaptively plugged, and the output portion extends to be located within the interface and is configured to be electrically connected to the electrical connector plugged into the interface.

2. The high-voltage power distribution device according to claim 1, wherein the interface has a cavity penetrating through a surface of the housing main body, and the output portion is exposed to a cavity wall of the cavity.

3. The high-voltage power distribution device according to claim 1 or 2, wherein the interface is a groove recessed in an outer wall surface of the housing main body.

4. The high-voltage power distribution device according to any one of claims 1 to 3, wherein the housing further comprises a second housing, the electrical member is provided on the second housing, and the first housing is connected to a side of the second housing in a first direction;
the interface is provided on the side of the housing main body in a direction perpendicular to the first direction;
or, the interface is provided at a top of the housing main body away from the second housing in the first direction.

5. The high-voltage power distribution device according to claim 4, wherein an opening of the interface is provided in a direction intersecting the first direction.

6. The high-voltage power distribution device according to any one of claims 1 to 5, wherein each of the output portions is spaced apart and protrudes inside the interface, and is provided facing the opening of the interface.

7. The high-voltage power distribution device according to claim 6, wherein a spacing distance between two adjacent output portions is greater than 3 mm.

8. The high-voltage power distribution device according to claim 6, wherein an insulating portion is further provided between two adjacent output portions, and the two adjacent output portions are electrically isolated by means of the insulating portion.

9. The high-voltage power distribution device according to claim 8, wherein a peripheral side wall of the insulating portion is fitted and connected to each inner side wall of the interface, and the insulating portion divides an internal space of the interface into a plurality of sub-regions, wherein one of the sub-regions is correspondingly provided with one of the output portions.

10. The high-voltage power distribution device according to claim 9, wherein the number of the sub-regions is greater than or equal to that of the output portions.

11. The high-voltage power distribution device according to any one of claims 7 to 10, wherein the interface has a first wall surface provided directly opposite to the opening, the output portion and the insulating portion both protrude from the first wall surface, and a protruding dimension of the insulating portion is greater than that of the two adjacent output portions.

12. The high-voltage power distribution device according to claim 11, wherein the plurality of output portions are sequentially arranged at intervals in a direction perpendicular to a direction from the first wall surface toward the opening, and the insulating portion is arranged parallel to the output portions.
in the direction perpendicular to the direction from the first wall surface to the opening, spacing distances between the insulating portion and the two adjacent output portions are L1 and L2, respectively, and a thickness of the insulating portion is L3;
in the direction from the first wall surface to the opening, the protruding dimensions of the insulating portion relative to the two adjacent output portions are L4 and L5, respectively, wherein
a sum of L1, L2, L3, L4, and L5 is greater than 3 mm.

13. The high-voltage power distribution device according to claim 12, wherein the sum of L1, L2, L3, L4, and L5 is greater than 9.5 mm.

14. The high-voltage power distribution device according to claim 12, wherein the sum of L1, L2, L3, L4, and L5 is greater than 19mm.

15. The high-voltage power distribution device according to any one of claims 12 to 14, wherein the housing main body is further provided with a guide structure, and the guide structure is configured to guide an external electrical connector to be adaptively plugged into the interface.

16. The high-voltage power distribution device according to claim 15, wherein the guide structure comprises guide ribs protruding from an inner wall surface of the interface, and the guide ribs are provided in parallel with the output portion.

17. The high-voltage power distribution device according to claim 16, wherein along an arrangement direction of the output portions, the guide ribs are provided on at least one side of each of the insulating portions and are arranged in parallel with the insulating portions at intervals and form a guide groove with the adjacent insulating portion.

18. The high-voltage power distribution device according to claim 16 or 17, wherein a plurality of reinforcing ribs are further provided in parallel and spaced apart on the inner wall surface of the interface, and the reinforcing ribs and the guide ribs are arranged in parallel and spaced apart.

19. The high-voltage power distribution device according to any one of claims 1 to 18, wherein the electrical connection member comprises a first connection member and a second connection member, and the interface comprises a first interface into which an external first connector can be adaptively plugged into, wherein
the connection portion comprises a first connection portion and a second connection portion, the output portion comprises a first output portion and a second output portion, the first connection portion and the first output portion are provided on the first connection member at intervals, the second connection portion and the second output portion are provided on the second connection member at intervals, the first connection portion and the second connection portion are electrically connected to the different electrical members, respectively, and the first output portion and the second output portion both extend into the first interface and are configured to be electrically connected to the first connector.

20. The high-voltage power distribution device according to claim 19, wherein there are a plurality of first connection members, there are a plurality of second connection members, and the number of the first connection members is equal to that of the second connection members.

21. The high-voltage power distribution device according to claim 20, wherein the first output portions of the plurality of first connection members and the second output portions of the plurality of second connection members are alternately arranged at intervals, or the first output portions of the plurality of first connection members are continuously arranged at intervals, and the second output portions of the plurality of second connection members are continuously arranged at intervals.

22. The high-voltage power distribution device according to any one of claims 19 to 21, wherein the electrical member comprises a relay, the relay has a first terminal and a second terminal that are electrically connected to two opposite ends of a coil, respectively, the first connection portion is electrically connected to the first terminal correspondingly, and the second connection portion is electrically connected to the second terminal correspondingly.

23. The high-voltage power distribution device according to claim 22, wherein the relay comprises at least one of a main positive relay, a main negative relay, and a pre-charge relay, and the number of the first connection members and the number of the second connection members are greater than or equal to that of the relays.

24. The high-voltage power distribution device according to any one of claims 19 to 23, wherein the electrical connection member further comprises a plurality of third connection members, the interface further comprises a second interface into which an external second connector can be adaptively plugged into, and the electrical member further comprises a plurality of high-voltage sampling members, wherein
the connection portion further comprises a third connection portion, the output portion comprises a third output portion, each of the third connection members is provided with one of the third output portion and at least one of the third connection portion at intervals, each of the third connection portions is connected to the high-voltage sampling member in one-to-one correspondence, and each of the third output portions extends into the second interface and is configured to be electrically connected to the second connector.

25. The high-voltage power distribution device according to claim 24, wherein one of the third connection members comprises one of the third connection portions, and one of the third connection members is electrically connected to one of the high-voltage sampling members in one-to-one correspondence.

26. The high-voltage power distribution device according to claim 24 or 25, wherein one of the third connection member comprises two of the third connection portions that are provided at intervals, the two third connection portions are correspondingly connected to two of the high-voltage sampling members, respectively, and the one third connection member is electrically connected to the two high-voltage sampling members correspondingly.

27. The high-voltage power distribution device according to claim 26, wherein the high-voltage power distribution device has a main circuit and a pre-charge circuit, one of the third connection portions provided on the same third connection member is electrically connected to the high-voltage sampling member provided in the main circuit, and the other third connection portion is electrically connected to the high-voltage sampling member provided in the pre-charge circuit.

28. The high-voltage power distribution device according to any one of claims 24 to 27, wherein the first interface and the second interface are spaced apart from each other, and a spacing distance between the first interface and the second interface is greater than 9.5 mm, or a spacing distance between the first interface and the second interface is greater than 19 mm.

29. The high-voltage power distribution device according to any one of claims 24 to 28, wherein the first interface and the second interface are located on the same side of the housing main body, or the first interface and the second interface are located on two adjacent sides of the housing main body, or the first interface and the second interface are located on two opposite sides of the housing main body.

30. The high-voltage power distribution device according to any one of claims 24 to 28, wherein the first interface and the second interface are provided at two opposite ends of the housing main body.

31. The high-voltage power distribution device according to any one of claims 24 to 29, wherein the housing main body is further provided with a first identification portion and a second identification portion, the first identification portion is provided on a side of the first interface, the second identification portion is provided on a side of the second interface, and the first identification portion and the second identification portion have different identification contents.

32. A battery device, comprising a battery cell assembly and the high-voltage power distribution device according to any one of claims 1 to 31, wherein the high-voltage power distribution device is electrically connected to the battery cell assembly.

33. An electric apparatus, comprising the battery device according to claim 32, wherein the battery device is configured to supply electric power to the electric apparatus.
